# EUROPEAN PATENT APPLICATION

(11) **EP 4 006 751 A1**
(43) Date of publication of application: **01.06.2022**
(21) Application number: 20020570.6
(22) Date of filing: 27.11.2020
(51) Int. Cl.: G06F 17/18, G06T 11/20

(54) **AUTOMATED AND HARDWARE EFFICIENT PROCEDURE FOR REPRESENTING BIG DATA**

(71) Applicant: Prisma Analytics GmbH, 80331 München (DE)
(72) Inventor: Schloer, Hardy Frank, 80331 München (DE)
(74) Representative: Reich, Jochen

(57) **Abstract**

The present invention is directed towards a method and an apparatus for automated and hardware efficient representation of big data. The present invention provides the advantage that even big data sets can be represented in an efficient way such that the complexity is broken down and a variety of parameters are compressed such that a comprehensive representation of huge data amounts is possible. With an increasing availability of data algorithms computer systems typically lack the ability to process and represent huge data sets in real time. In response to this the present inventions suggests and efficient and yet appropriate way for representation of the large data sets on limited hardware devices. The invention is furthermore directed towards a respectively arranged system along with a computer program product and a computer-readable medium.

## Description

The present invention is directed towards a method and an apparatus for automated and hardware efficient representation of big data. The present invention provides the advantage that even big data sets can be represented in an efficient way such that the complexity is broken down and a variety of parameters are compressed such that a comprehensive representation of huge data amounts is possible. With an increasing availability of data algorithms computer systems typically lack the ability to process and represent huge data sets in real time. In response to this the present inventions suggests and efficient and yet appropriate way for representation of the large data sets on limited hardware devices. The invention is furthermore directed towards a respectively arranged system along with a computer program product and a computer-readable medium.

US 10,187,254 B2 shows methods, systems and products which predict emotional moods. Predicted moods may then be used to configure devices and machinery. A communications device may be configured to a mood of a user. A car may adjust to the mood of an operator. Even assembly lines may be configured, based on the mood of operators. Machinery and equipment may thus adopt performance and safety precautions that account for varying moods.

WO 2014/ 074426 A1 shows a method for predicting social sentiment of a plurality of persons.

WO 2019/ 086 638 A1 shows a method for building computing machinery out of multiple separate networked components, wherein the method of assigning addresses to individual network nodes is designed to make improbable, to any required degree of certainty, the possibility that one node in the network or subnetwork has the same address as another node in the network or subnetwork, and for communicating messages to and from such nodes with assigned addresses to other and possibly different nodes with possibly different addresses in said computer network. The multiple separate network nodes are capable of computing functions on the data sent to them, and of responding with the data resulting from said computations or transmitting such results to other nodes in the network. Collectively a system of such nodes implements a finite general purpose Turing machine.

WO 2020/ 079 014 A1 shows representations of physical objects in text, stores them in a particular type of database, and allows simplified retrieval and abstraction of said physical objects. The simplified retrieval and abstraction facilitates the drawing of inferences regarding properties and behavior of a particular object from consideration of other properties and behaviors of that object and from references to that object and associations related to that object.

The private sector is witnessing an increase in the popularity of data science, with decision makers relying heavily on statistical analyses that identify and illustrate trends in a linear fashion. Basic frequencies displayed on time series are the general norm for any instance and situation, great or small, from estimates of world hunger to lipstick sales in the United States. Current forecasting and prediction techniques use knowledge of past events to determine what might happen in the future by analyzing various single-dimensional quantitative measurements combined with different time indexes.

This omni-popular approach provides clear evidence that the theories, methods, and data currently available for observing and understanding technical energy dynamics in real time are fractional, and thus, not wholly reliable. They break the world down into small, manageable pieces, resulting in output that is undeniably of high quality. Nevertheless, this approach is atomistic and criterion-based. The pursuit of an integrated, complex system of knowledge management is useless without a holistic tool that collects, stores, processes, and analyzes data in a theoretically sound manner and with a high methodological validity.

Complex data sets of extensive amount are typically processed using superscalar computers and respective queries are provided to the user by likewise huge amounts of data sets, from which the user has to choose the appropriate information. Typically, the prior art does not provide a solution to the problem that big data has to be understood by the user who typically operates limited hardware resources. The hardware resources may comprise a single computer system and a limited screen size for representation of the data. Hence, a solution is required that addresses both problems namely the computation of large data sets in real time as well as the presentation of comprehensive information on a limited screen size with a limited hardware resolution.

Consequently, it is an object of the present invention to provide a method for automated and hardware efficient representation of big data sets. Moreover, it is an object of the present invention to provide a respectively arranged system arrangement being implemented in accordance with the suggested method. Moreover, it is an object of the present invention to provide a respectively arranged computer program product and a computer-readable medium.

The object is solved by the subject-matter according to claim 1.

Accordingly, a method for automated and hardware efficient representation of big data stets is suggested, comprising the steps of providing a glossary of words in at least one data storage, wherein to each of the words contained in the glossary a technical mood is assigned, and formulating a query containing at least a selection of the words in the glossary; providing an empirical data source, in which a number of appearing words out of the query is counted; and arranging a set of indicators in a circular diagram, the indicators reflecting the technical mood by their position and size of appearance in the circular diagram.

The suggested method can be performed automated as no further input is required from an operator. The only fact to be provided is the query input through the user. Moreover, the suggested method is hardware efficient on both sides namely the computation of the empirical data sets as well as the presentation of the resulting diagram to the user. One aspect of hardware efficiency is the fact that the user can operate a commonly known computer screen and is still presented the major extract of big data sets. In this way the user is able to analyze big data sets in real time without requiring specific hardware devices.

In a preliminary step providing a glossary of words is performed by means of at least one data storage. This refers to the fact that the glossary can be distributed over a heterogeneous environment and several data storages may be provided to store the glossary. In general the present invention does not only address words but may still compute any data object, whatsoever. For instance, an image can be analyzed by pattern matching and accordingly, the shown objects are extracted and are named by a word. The same holds through for audio files, which can be analyzed by pattern matching or voice recognition. Hence, preliminary steps may extract words from any data source.

Each of the words contained in the glossary has at least one technical mood assigned meaning that each word holds at least one technical parameter. In general a mood is a specific semantic being expressed by the underlying empirical data source. Consequently, the notion of a technical mood can be replaced by a technical parameter. The technical parameter indicates a specific perception of the query in their underlying empirical data source.

For instance, an empirical data source is provided such as the internet and a user formulates a query containing at least a selection of the words in the glossary. It may be the case that the user queries the underlying method for the notion "virus". In general a virus infiltrating a computer system is something bad as malware may destroy underlying data structures. Consequently, the notion of "virus" may be assigned the technical mood of "conflict".

The empirical data structure is analyzed and accordingly, a number of appearing words out of the query is counted. For instance, the empirical data source may comprise the wording "virus" a specific number of times. As the word "virus" is connected with the technical mood "conflict", the number of occurrences of the word "virus" is the same as the number of the importance of the technical mood "conflict".

It may likewise be the case that the word "virus" is likewise connected with the technical mood of "action". A malware on a computer typically triggers a specific action by the user. Accordingly, the number of occurrences of the word "virus" likewise increases the number of occurrences of "action".

Hence, an indicator can be calculated which represents the predefined technical moods. For each word being defined in the glossary and being present in the empirical data source the respective counter is increased. In this way the empirical data source can be evaluated regarding specific technical moods.

A further word may be "programming" which may be assigned the technical mood of "action" but not the technical mood of "conflict". Hence, at each occurrence of the notion "programming" the mood of "action" is increased but not the technical mood of "conflict". Hence, specific moods can be extracted from the empirical data source.

Once these numbers are available the indicators can be arranged in a circular diagram. The diagram then reflects the overall technical moods being comprised in the empirical data source. Hence, the indicator may be placed where the specific section for "action" is located and likewise further measurements may be applied such as a distance from the center, also referred to as radius, or a circumference also effecting the size of the section. In this way the indicator can represent specific moods and by the size of the indicator it can represent the importance of the mood being related to the number of occurrence of the specific mood. Summarizing this and providing an example the indicator may be placed in the section referring to the technical mood "action" at a big size indicating the very importance of the respective mood within the empirical data source.

Summarizing the above an efficient algorithm is provided which allows the system to break down big data sets and still represent such data in an efficient way. Moreover, the underlying hardware can be used efficiently as merely a two-dimensional diagram is provided after all. This means that no highly performing computer hardware is required but even large data sets can be broken down to a circular diagram. Such a circular diagram can be represented on typically known hardware devices.

The output is so efficient that even a mobile computing system, such as a smartphone can be used for data presentation. Moreover, the computation of the indicators can be performed on a distributed hardware environment such that the only step to be performed on the user end device is the representation of the data. In this way the processing of the bit data sets can be deployed on a highly performing server while the representation can be performed on a normal user end device.

According to an aspect of the present invention to each of the words at least two technical moods are assigned and hence, the appearing word in the empirical data source contribute to at least two technical moods. This provides the advantage that any number of mood can be applied to the suggested method. Consequently, specific words may for instance comprise 8 or 14 moods, wherein the number of technical moods can always be the same for each word or different cardinalities of technical moods can be assigned. For instance, a first word may be assigned two moods and five moods may be assigned to a second word. In case the respective parameter is required for computation and a specific mood is not present the parameter can be filled with 0. In this way a vector can be established comprising several instances of one and zero indicating the presence or absence of a technical mood regarding this specific word.

According to a further aspect of the present invention for each appearing word an appearance counter of the assigned technical mood is incremented. This provides the advantage that for each word the technical mood is extracted and consequently, the overall mood is increased due to the specific word. Generally, a word may contribute to several moods which are all incremented at the appearance of this specific word. Hence, the maximum appearance counter of a specific mood equals the appearance of the respective word in the empirical data source.

According to a further aspect of the present invention an absolute number of highest counted indicators or a relative number of highest counted indicators relative to a size of the empirical data source is arranged in the circular diagram. This provides the advantage that not all words need to be represented in the respective diagram but only a comprehensive number of indicators is presented, which may likewise be dependent on the screen size and screen resolution serving as output device. In general, the indicators may reflect the respective moods of the empirical data source or at least a subset thereof. For instance, the empirical data source may be divided into articles, such as websites. Then the indicators may be computed for the empirical data source as such or at least a specific number of websites or even a single website. In this was the overall mood can be reflected of the empirical data source or at least a part thereof.

According to an aspect of the present invention the position of the indicators is calculated by at least one of a radius, theta θ, and/ or a circumference. This provides the advantage that different measures can be computer based on the number of appearing word and respective moods. Hence, different semantics can be indicated in the circular diagram and all dimensions can be used for data representation.

According to a further aspect of the present invention various degrees of intensity are illustrated by the radius of the diagram. This provides the advantage that the distance to the center of the circular diagram indicates either a weak or strong influence of that technical mood. In this way the full range of the circular diagram is used.

According to a further aspect of the present invention reflecting the technical mood is performed by breaking down the circular diagram into layers comprising segments, wherein each segment is identified by a color and a label indicating the technical mood. This provides the advantage that the circular diagram has several dimensions and regions. First of all layers may be generated which are distinguished by a different radius. Moreover, such layers may be divided into sections. The layers may not be disjoint such that overlap segments may be present. Using the circumference the segments can be adapted in their size.

According to a further aspect of the present invention reflecting the technical mood is performed by assigning each indicator to a segment. This provides the advantage that each segment may indicate a mood and whenever such a mood is presented by the data source the indicator is places in this specific segment. The position within the segment holds further semantics and is defined for instance by parameters such as a radius or an angle.

According to a further aspect of the present invention each indicator reflects the frequency count of the glossary word occurrences by its size. This provides the advantage that the indicators can be plotted bigger in case of several occurrences and can be plotted smaller in case the respective mood is less important. In this way a comprehensive data representation is provided which uses the limited screen to its full advantage.

According to a further aspect of the present invention several glossaries are combined using a communication infrastructure thereby creating the glossary of words. This provides the advantage that several glossaries can be joint together using interfaces and moreover, specific fields of terminology can be covered. Different suppliers of glossaries can be used and an overall glossary can be formed using all of the provided information sources.

According to a further aspect of the present invention percentages and occurrences per layer, circular variance and standard deviation, variance and standard deviation of radius and/ or mean resultant lengths, respectively length, are used to indicate which layer of the circular diagram is most and least intense in terms of technical moods. This provides the advantage that several measures are defined and consequently, the circular diagram can be populated very meaningful. In this way the semantics of the data source are reflected in a sufficient way despite of the large amounts of data.

According to a further aspect of the present invention a middle of the circular diagram represents an apathetic, converging collective technical mood. This provides the advantage that additional semantics are applied even to the center of the circular diagram. In this way the diagram can be understood comprehensively at a first glance.

The object is also solved by a system arrangement for automated and hardware efficient representation of big data stets, comprising at least one communication interface arranged to provide a glossary of words in at least one data storage, wherein to each of the words contained in the glossary a technical mood is assigned, and formulating a query containing at least a selection of the words in the glossary; an analysis component arranged to provide an empirical data source, in which a number of appearing words out of the query is counted; and an output unit arranged to arrange a set of indicators in a circular diagram, the indicators reflecting the technical mood by their position and size of appearance in the circular diagram.

Accordingly a computer implemented method for extracting machine readable multi-dimensional parameter sets is suggested, comprising the steps of storing a set of named object entities and assigning respectively one vector of technical values to each of the object entities; reading out a heterogeneous data source over a distributed communication network and identifying the named object entities therein; calculating a count the occurrences of each of the named object entities in the heterogeneous data source and weighting the vector of technical values in accordance with the calculated count per object entity; arranging the weighted vector in a multidimensional data space; and addressing the arranged vector using a machine device for further processing and for initializing control commands.

The object is also solved by a system arrangement for extracting machine readable multi-dimensional parameter sets, comprising a data storage device arranged to store a set of named object entities and assign respectively one vector of technical values to each of the object entities; a communication interface arranged to read out a heterogeneous data source over a distributed communication network and identify the named object entities therein; a computation device arranged to calculate a count the occurrences of each of the named object entities in the heterogeneous data source and weight the vector of technical values in accordance with the calculated count per object entity; a further computation device arranged to arrange the weighted vector in a multidimensional data space; and a machine device arranged to address the arranged vector, the machine device being arranged to further process and initialize control commands.

The object is also solved by a computer program product comprising instructions to cause the arrangement to execute the steps of the method as well by a computer-readable medium having stored thereon the computer program.

It is of special advantage that the method as suggested above can be executed using structural features of the suggested device and control unit. Accordingly the method teaches steps which are arranged to operate the suggested device. Furthermore, the device comprises structural features allowing the accomplishment of the suggested method. In addition a computer program and a computer program product respectively is suggested comprising instruction which perform the suggested method when executed on a computer or the device according to the present invention. Furthermore, the instructions provide means for implementing the structural features of the claimed device. Accordingly an operable image of the structural features of the device can be created. Likewise an arrangement comprising the structural device features is provided.

Wherever, structural features are provided they can likewise be established virtually thereby creating a virtual instance of physical structures. For instance a device can likewise be emulated. It may be the case that single sub steps are known in the art but the overall procedure still delivers a contribution in its entireness.

Further advantages, features and details of the invention emerge from the following description, in which aspects of the invention are described in detail with reference to the drawings. The features mentioned in the claims and in the description can each be essential to the invention individually or in any combination. The features mentioned above and those detailed here can also be used individually or collectively in any combination. Functionally similar or identical parts or components are in some cases provided with the same reference symbols. The terms "left", "right", "top" and "bottom" used in the description of the exemplary aspects relate to the drawings in an orientation with normally legible figure designation or normally legible reference symbols. The aspects shown and described are not to be understood as conclusive, but are exemplary for explaining the invention. The detailed description is provided for the information of the person skilled in the art; therefore, in the description, known circuits, structures and methods are not shown or explained in detail in order not to complicate the understanding of the present description. The invention will now be described merely by way of illustration with reference to the accompanying figures, which show:
- Figure 1:: a flowchart of a computer implemented method for automated and hardware efficient representation of big data stets according to an aspect of the present invention;
- Figure 2:: a two dimensional data space with parameters further describing the graphical representation space according to an aspect of the present invention; and
- Figure 3:: a further two dimensional data space with parameters further describing the graphical representation space according to an aspect of the present invention.

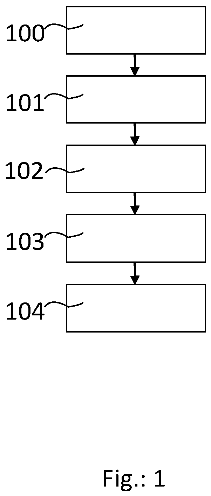

Figure 1 shows a method for automated and hardware efficient representation of big data stets comprising the steps of providing 100 a glossary of words in at least one data storage, wherein to each of the words contained in the glossary a technical mood is assigned, and formulating 101 a query containing at least a selection of the words in the glossary; providing 102 an empirical data source, in which a number of appearing words out of the query is counted 103; and arranging 104 a set of indicators in a circular diagram, the indicators reflecting the technical mood by their position and size of appearance in the circular diagram.

The user is able to select a time interval indicating from which to which date the heterogeneous data source is to be considered. Typically documents or information items in general have a time stamp and hence the data basis can be restricted using these intervals.

The person skilled in the art will appreciate that individual method steps can be carried out iteratively and/ or in a different order.

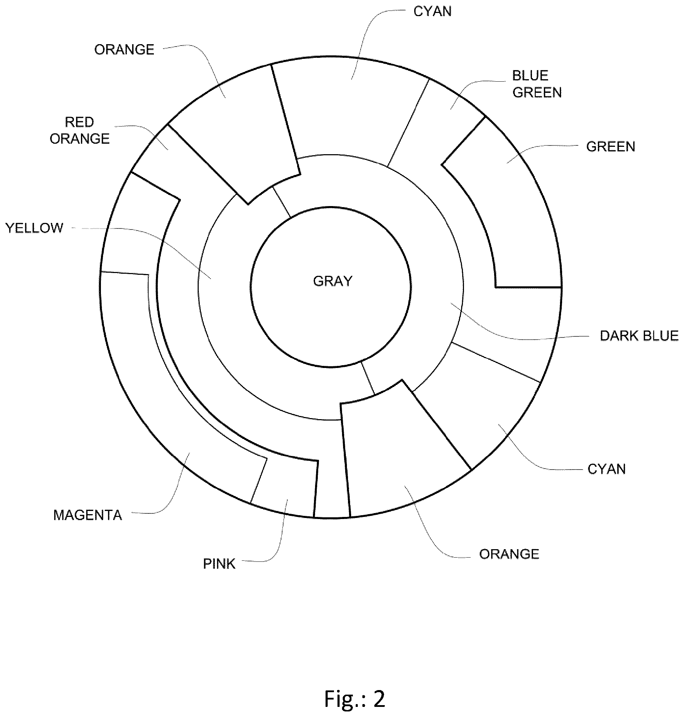

Fig. 2 shows the circular diagram which is segmented into radial layers being again divided into segments. The radial layers form regions between, respectively, two values each defining one radius. As can be seen on the top left-hand side of Fig. 2, the layers do not have to be destroyed but may overlap. On the top right-hand side it is shown that one section can be included in another section. Each section represents a specific technical mood and the indicators can be placed inside the circular diagram.

In the present figures the indicators are not depicted but they can easily be established by plotted dots. The dots can differ in their size and can be arranged anywhere within the circular diagram.

The inventor has surprisingly found out that exactly this representation of the circular diagram is most suitable for the introduced purposes. While in general diagrams may we well-known the present invention provides a technical teaching indicating how to populate the respective diagram and furthermore provides and automated and hardware efficient approach to data extraction and representation.

Each of the section holds a label indicating a specific technical mood, for instance "action". Moreover, the different sections may be colored, wherein the color indicates further information relating to the technical mood. For instance, the color intensity may provide information about the semantics of the circular diagram.

As shown in Fig. 2 bit data sets can be represented in a two-dimensional diagram without necessity to provide specific representation techniques but rather semantics are shown in a comprehensive way and complexity is broken down such that hardware efficiency is granted.

There exists no other scientific model built and perfected that is capable of observing, analyzing, and visualizing technical energies in a way that comprehensively combines a grounded theoretical base, empirical information, and a complex methodology than the one being currently suggested. The model is one of the contributions the present invention creates. Technical science has contributed in a variety of ways throughout its history developing policies or decision-making systems - by proposing genius and critical theories that shed some light on how the world works, by developing rigorous quantitative methods that organize our knowledge, and by acknowledging the diverse empirical data that are available to scientists. However, it is an observation that, while each perspective is in itself valuable, they diverge and produce limited and fragmented results. This application describes the technical solution to this problem, the Technical Energy Diagram - a composite tool for observing and understanding technical moods that makes the best out of the intersection of these three perspectives on knowledge creation and management.

The Technical Energy Diagram illustrates the trends of collective moods on a circumplex, combining sectional measures with longitudinal measures displayed in a panel format. This data processing, visualization, and analysis tool displays polar data combined with trigonometric functions on a geometric space, thus allowing for more than two measurements on the same observation at a single point in time. Observations from our own extensive research introduce these additional points as principles that have guided the development of the Technical Energy Diagram and will further guide the interpretations on the plotted data:
Understanding the collective state of the mind of a society relative to a particular issue is the basis to understanding its behavior, both in the present and in the future.
- The collective mind of society makes very little difference between the situation people desire for the future, the situation they are faced with, or the situation they believe they are in presently. Therefore, hereinafter the invention names all of these the active states of a society - the "issues that are on people's minds" or the collective state of a society.
- When one reads the collective state of a society, one gets a strong indication of what reality society is currently transforming into. Reading the collective state of mind of a society is like reading a leading indicator with a positive probability to reveal our collective future.
- Every issue must be evaluated separately to assemble and understand the combined big picture. Most analyzed issues will produce a contradictory output. It is, therefore, important to understand the quantitative distributions of the qualitative elements within a society to understand the energy and direction in which it is moving.

Using radii, theta, and a circumference, the diagram is a geometric space on which data about collective moods, affects, and emotions is plotted, thus creating a dynamic and complex image of the way an object is perceived by collectives and to what intensity. Fourteen energy layers positioned in the geometric space observe collective affects and emotions at various degrees of valence and arousal.

A glossary-based approach in content analysis is fundamentally a technique for counting terms. The empirical data - various types of discourses in text format - is first observed word by word. Once a glossary entry is identified in the empirical data during this observation, it is extracted and counted. The Technical Energy Diagram functions in the same way. Our machines run our Technical Energy Glossary and any adjacent Specialized Glossaries against our empirical data, identifying, counting, and extracting glossary entries. These entries are then plotted on the geometrical space. As the frequency of a glossary word plotted on the circumplex increases across empirical observations - or, in other words, as data is input in the algorithm - the diameter of the data point on the diagram increases.

The Technical Energy is not only aligned with valuable standardized glossaries, such as the Linguistic Inquiry and Word Count Dictionary or the Regressive Imagery Dictionary, but it is also built according to cutting-edge computational social scientific principles that make human-machine interaction exciting and inspiring. In addition to the generalized Technical Energy Glossary, the invention has also built extension packs of specialized glossaries to observe and measure the dynamics of specific fields of interest. These extension packs are built in both a deductive approach, using expert sources of specialized vocabulary and an inductive approach: specialized vocabulary extracted empirically from the natural language in news articles and scientific sources classified by topic.

The suggested diagram is like a telescope. However, it does not look at the stars, it looks inwards, searching for the mass, gravity fields, and black holes of the collective minds of human society. These appear as circular fields of varying sizes on the graph plotting area, representing the amount of energy they carry. Depending on where they appear on the plotting area, they energize and fuel different sentiments and behaviors in society. It is important to understand that the distributions across the collective moods observed by the diagram set a very specific direction in how society thinks about various issues and how it will react to them in the future. Societies change all the time; therefore, one must measure multiple energies often. The present invention completes this frequent measurement by using the Technical Energy Diagram as a dynamic tool that captures short-term, mid-term, and long-term event memories. Not only does our telescope look at queries precisely defined by our users, it also extracts the dynamics of technical energies on a weekly basis. As a result, whenever there is interest, the diagram shows us how moods change across time, from one week to another, occasionally with stunning game changes.

The Technical Energy Diagram harvests the complexity and simplicity of collective information by looking at the composition of the states of feeling and behavior. It captures the fine dynamic of action and reaction in technical energies by inquiring about atomistic elements that build technical and societal fabric: abstract concepts, time references, persons, events, physical objects, groups and organizations, science and technology, and geography. One can call this the C+8 technology and the invention uses it to study causality phenomena in our sustained, highly qualified, and successful effort to understand the rhetoric of our times. The user can select time intervals and any or all of the C+8 atomic elements that need to be observed on the geometric space of the diagram.

As the data points populate the Technical Energy Diagram, collective trends and patterns of feeling and behavior can be observed. The circular distribution of the variables of technical mood invites the user to read and interpret human behavior and sentiment as flowing between different directions and levels of arousal, as previously described. As such, the circle displays collective content in an Active Environment on the left hemisphere and a Reactive Environment on the right hemisphere. The data that appears on the Active Environment reflects behavior that revolves mostly around action rather than discussion - intensity, heat, and incitement representing just some of its characteristics. The Reactive Environment exemplifies behavior that is generally considered cooler, defined more through debate and discussion and less by action. Furthermore, these states of feeling and behavior have various degrees of intensity which are captured and illustrated by the radius of the diagram. Level 0 in the center, measured on the 0-2.5 radius, shows a low interest in reality, where people live in their own world and do not care much about external reality, unless it has a direct and immediate impact on themselves. The mid-range level, on the 2.5-4 radius, indicates a normal sense of reality. People and collectives live in a balance between their own mental space and the external influence of life. The outermost level, on the 4-7 radius, is where an extremely strong sense of reality and participation in life affairs exists. This describes an intensely participatory culture in both the Active and Reactive environments.

The Technical Energy Diagram in the application displays an Energy Layers legend, called Segment Breakdown, where each layer, identified by color and label, is assigned the frequency count of glossary word occurrences that are plotted on the circumplex. This gives an initial insight into which energy is most intense for a particular query in the application. More refined statistical calculations bring detail and nuance to word frequencies. Percentages and means per layer, circular variance and standard deviation, variance and standard deviation of radius, and mean resultant length are used to indicate which layer of the Technical Energy Diagram is most and least intense in terms of technical moods. It is our objective to use such measurements to observe change across time, computing the statistical data of the diagram in time series and probability models. The versatility of the energy layers based on the Active/Reactive Environment distinction allows us to create custom Technical Energy Diagrams, based on the needs of our customers. Currently, the implemented application integrates several models of the Technical Energy Diagram.

In the following an example of the suggested data representation is provided. However, the names of the section and the respective colors are merely for illustration purposes and not meant to be understand in a limiting way. Of course, the exemplary colors and names can be replaces by any technical terminology and color. The names such as "escalation" are merely for demonstration purposes which also holds true for the colors such as "orange".

The Active Environment is the intense, hot, incited side, where the expected behavior is more action, less talk. Here, one observes how Frustration and Motivation are the underlying collective moods. Power and Fear - the Orange Zone - on both sides of the Red Zone are a kind of feeding zone, where technical mood trends feed Escalation, a realm between power, action, and fear. These two orange surfaces also feed each other through polarization and calls to action. The Red Zone is the escalation zone, containing the most punishing, energetic, expected, and uncontrollable tendencies nurtured by the current state of power and fear on its sides. On top of it, the Pink Zone indicates strong decisiveness and supports violence as a solution. This is when and where aggression transforms into direct violence.

Further on, at the top of these three zones one finds the Magenta Zone, where crisis, war, and major catastrophes are on the brink or in full progress.

The Reactive Environment is the 'cool' side, where behavior is set by Hope, Anxiety, and Debate, but much less by action. The Blue Zone technical mood on top of the Dark Blue and Navy Zones hopes for and expects an uneventful status quo. It is characterized by technical inertia and low energy in how technical change occurs. In its upper sector this zone illustrates that people seek ideas and ideals. In its lower sector, the Blue Zone shows a life filled with negative expectations, technical action is almost frozen. The next layer, the Green Zone, is where people debate and innovate. The Dark Green Zone is where people find consensus and come up with constructive solutions, where they are driven by hope. The middle of the circumplex, the Grey Zone, is where apathetic collective moods converge. In a more applied reading, Power - Inaction - Fear form an ideological axis. To its left, Frustration, Motivation, Escalation, Action, and Conflict accumulate their energies in a HOT ACTION trend that, obviously, indicates propensity towards intense action. To the right of the ideological axis, Anxiety, Hope, Ideals, Negative Expectations, Debate, and Agreement accumulate energy in what can be called COOL ACTION. This energy indicates that people seek ideas and discuss possible solutions to technical issues. The Active Environment is the area committed to heat, pressure, and force. Decisions and actions made in order to crush rivals, avoid financial downfall, initiate hostile takeovers, and so, on are located here. On the other side there is the Reactive Environment that is defined by greater calm and positivity. We find new ideas, higher goals, and positive expectations in this area. The Orange Zone shares both Environments, since Strategic Push and Fear of Failure can have both heat and calm. This zone feeds all the others on the circumplex and is equally balanced through its polarization on opposite sides of the wheel.

The Dark Yellow Zone indicates the beginnings of result pressure, not strong enough to really make anything happen, but causing enough disturbance to make its presence felt. The Yellow Zone shows initiative. The zones with increasing heat levels are Red, Pink, and Purple, respectively, positioned on top of each other. The Red Zone indicates commitment, where future actions and decisions are pushed forward by the Orange Zone on both its sides. The Pink Zone - tough action - is determined by the Red Zone and is characterized by harsh actions that lead to success or failure. Conflict is imminent in the Pink Zone, escalating until it reaches the Purple Zone that contains open attacks and activities against various entities.

The Dark Blue and Navy Zones are the base for all the other zones on the Reactive Environment. The first step to confidence, value definition, and innovation is defining expectations, while to apprehension is hesitation. This zone contains almost no action and identifies more with thought and speech. Next are the Blue, Green, and Dark Green zones. Policies and future goals are determined here. The Blue Zone is both innovative and apprehensive, and is affected by the Orange Zone. The Green Zone is more focused on defining value and making progress, a step higher than the Blue Zone but not as high as the Dark Green Zone, where one finds confidence. Level 0 (grey) indicates equilibrium, the status quo is maintained here with no issues that upset balance. In a more applied reading, Strategic push - Equilibrium - Fear of Failure form a Vision axis. To its left, Result Pressure, Initiative, Commitment, Tough Action, and Attack Competition accumulate their energies in an EXECUTION trend that indicates action to be taken on the market or against competition. To the right of the Vision axis, Defining Expectation, Hesitation, Apprehension, Innovation, Defining Value, and Confidence accumulate energy in what can be called STRATEGY, which indicates strategic planning and development to be in tune with the market.

All tabs described previously mine the data that our system parses and stores in real time. Text to circumplex is a spin-off of these tabs, fit for users who want to explore their own unstructured, natural language text. Currently, the tool is usable with text in English. The Technical Energy Layers are similar to those in the Technical and Political Momentum tool, as Text to circumplex explores the affective dimension of the full text that the user inserts in the text field on the left side of the screen. The automatically generated descriptive statistics follow the same structure that the disclosure has already illustrated in the previous sections.

The massive quantities of information that people currently produce about themselves, about others, about things, relations, and interactions that shape the world are part of a socio-technical phenomenon that is equally complex and simple. It is complex in its diversity of colors, languages, nuances, timings, technologies; it is simple in its patterns, trends, and rules of organization around nuclei of energy. The contextualization of the reality atoms in the C+8 model on the Technical Energy Diagram is an exclusive, high premium source of knowledge about the current and potential dynamics of the world. We provide insight into collective initiatives of polarized action and into reactions and responses to such initiatives. We provide an elaborate guide to interpret these behaviors and the associated feelings that arise from our crowd data. The Technical Energy Diagram is an excellent, cutting edge digital tool that offers contextual qualitative insight into the stories that frame economic and political events, while also allowing the user to draw their own conclusions about the universe. The diagram is equally directed and undirected - it provides expert guidelines as to what the data means, while at the same time encouraging a personal interpretation and explanation of behaviors.

In general a circumplex can likewise be refered to as circular diagram.

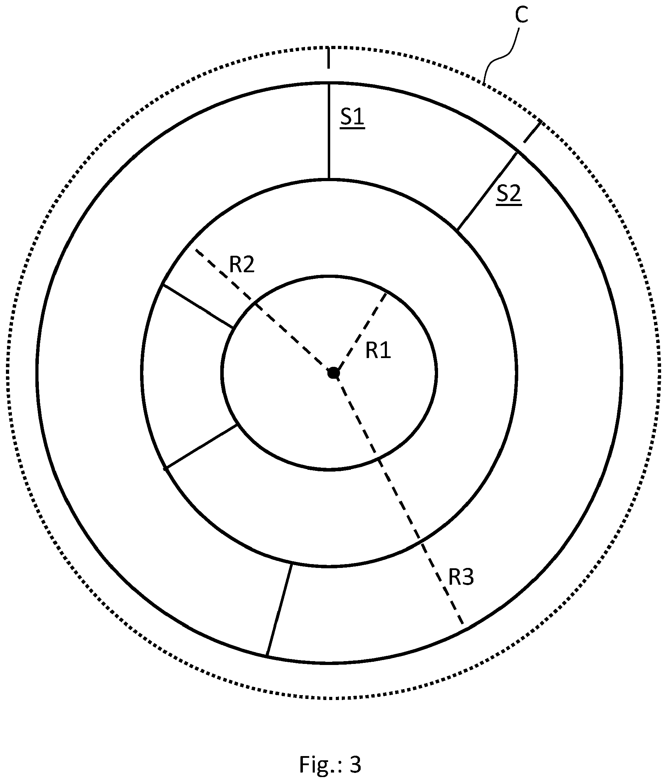

Fig. 3 shows a two-dimensional data space and indicates how the data can be arranged within the data space. For instance, measurements can be used such as the radius or a specific angle, which is not shown in the present figure. Moreover, a circumference C may be used for arranging data sets. In this way sections can be created such as section S1 or S2. Moreover, different sections can be addressed by a specific radius, such as radius R1, R2, or R3. The provided measurements are merely examples and are only for demonstration purposes. They are not to be understood as limiting restrictions.

## Claims

1. A method for automated and hardware efficient representation of big data sets, comprising:
- providing (100) a glossary of words in at least one data storage, wherein to each of the words contained in the glossary a technical mood is assigned, and formulating (101) a query containing at least a selection of the words in the glossary;
- providing (102) an empirical data source, in which a number of appearing words out of the query is counted (103); and
- arranging (104) a set of indicators in a circular diagram, the indicators reflecting the technical mood by their position and size of appearance in the circular diagram.

2. The method according to claim 1, **characterized in that** to each of the words at least two technical moods are assigned and hence the appearing word in the empirical data source contributes to at least two technical moods.

3. The method according to claim 1 or 2, **characterized in that** for each appearing word an appearance counter of the assigned technical mood is incremented.

4. The method according to any one of the preceding claims, **characterized in that** an absolute number of highest counted indicators or a relative number of highest counted indicators relative to a size of the empirical data source is arranged in the circular diagram.

5. The method according to any one of the preceding claims, **characterized in that** the position of the indicators is calculated by least one of a radius, theta and/ or a circumference.

6. The method according to any one of the preceding claims, **characterized in that** various degrees of intensity are illustrated by the radius of the diagram.

7. The method according to any one of the preceding claims, **characterized in that** reflecting the technical mood is performed by breaking down the circular diagram into layers comprising segments, wherein each segment is identified by a color and a label indicating the technical mood.

8. The method according to claim 7, **characterized in that** reflecting the technical mood is performed by assigning each indicator to a segment.

9. The method according to any one of the preceding claims, **characterized in that** each indicator reflects the frequency count of the glossary word occurrences by its size.

10. The method according to any one of the preceding claims, **characterized in that** several glossaries are combined using a communication infrastructure thereby creating the glossary of words.

11. The method according to any one of the preceding claims, **characterized in that** percentages and occurrences per layer, circular variance, standard deviation, variance and standard deviation of radius and/ or mean resultant length are used to indicate which layer of the circular diagram is most and least intense in terms of technical moods.

12. The method according to any one of the preceding claims, **characterized in that** a middle of the circular diagram represents an apathetic, converging collective technical mood.

13. System arrangement for automated and hardware efficient representation of big data sets, comprising:
- at least one communication interface arranged to provide (100) a glossary of words in at least one data storage, wherein to each of the words contained in the glossary a technical mood is assigned, and formulating (101) a query containing at least a selection of the words in the glossary;
- an analysis component arranged to provide (102) an empirical data source, in which a number of appearing words out of the query is counted (103); and
- an output unit arranged to arrange (104) a set of indicators in a circular diagram, the indicators reflecting the technical mood by their position and size of appearance in the circular diagram.

14. A computer program product comprising instructions to cause the arrangement of claim 13 to execute the steps of the method of any one of claims 1 to 12.

15. A computer-readable medium having stored thereon the computer program of claim 14.
